Europäisches Patentamt

European Patent Office

Office européen des brevets

(11) Publication number: **0 058 472**
**B1**

# EUROPEAN PATENT SPECIFICATION

(45) Date of publication of patent specification: **23.04.86**

(51) Int. Cl.⁴: **A 01 M 7/00, B 05 B 5/02**

(21) Application number: **82300303.3**

(22) Date of filing: **21.01.82**

(54) **Agricultural spraying apparatus and containers for use therewith.**

(30) Priority: **12.02.81 GB 8104314**
**03.04.81 GB 8110543**

(43) Date of publication of application:
**25.08.82 Bulletin 82/34**

(45) Publication of the grant of the patent:
**23.04.86 Bulletin 86/17**

(84) Designated Contracting States:
**AT BE CH DE FR GB IT LI LU NL SE**

(56) References cited:
**EP-A-0 011 991**
**EP-A-0 025 280**
**DE-A-2 550 930**
**DE-A-2 731 712**
**FR-A-2 157 527**
**US-A-3 877 645**
**US-A-4 044 227**
**US-A-4 195 672**

(73) Proprietor: **IMPERIAL CHEMICAL INDUSTRIES PLC**
**Imperial Chemical House Millbank**
**London SW1P 3JF (GB)**

(72) Inventor: **Coffee, Ronald Alan**
**Thursley Copse Farnham Lane**
**Haslemere Surrey (GB)**
Inventor: **Houghton, Leonard Eric**
**Culver Croft Pound Street**
**Petworth Sussex (GB)**
Inventor: **Bennett, Peter Charles**
**68 Parkhurst Fields Green Lane**
**Churt Surrey (GB)**
Inventor: **Johnson, Graham Charles**
**1 Heather Mount Stoney Bottom**
**Grayshott Hindhead Surrey (GB)**

(74) Representative: **Roberts, Timothy Wace et al**
**Imperial Chemical Industries PLC Legal**
**Department : Patents PO Box 6**
**Welwyn Garden City Herts, AL7 1HD (GB)**

Courier Press, Leamington Spa, England.

## Description

The present invention relates to spraying systems, and more particularly to spraying systems for use in applying agricultural chemicals, e.g. pesticides, to land or to crops or weeds growing therein.

In nearly every country of the world, agricultural spraying of land or crops is widely carried out, frequently from a vehicle such as a tractor or an aircraft. Spraying is usually carried out using an active ingredient (e.g. a herbicide) dissolved or disposed in a diluent (e.g. oil or water). Thus, a tractor may carry a spraytank filled with water, into which a concentrated liquid or powder formulation of the active ingredient is poured and mixed prior to spraying.

This arrangement has drawbacks. Pesticide active ingredients are frequently toxic to man to a greater or lesser extent, particularly in concentrated form. Thus, in some cases, emptying a concentrated pesticide formulation into a spraytank can represent a hazard, in particular to unskilled or poorly trained operators. It is also possible for such operators to make mistakes in the dilution procedure, by putting in either too little pesticide (perhaps in consequence leaving a crop unprotected) or too much (which is wasteful and could damage a crop or the environment).

There is in consequence a need for spraying systems which do not involve dilution of concentrated pesticides by the operator. In such systems, either the pesticide formulation is not diluted at all (as is now sometimes done, for example, in ultra-low volume spraying of insecticides from a rotary atomiser, and has also been proposed for certain electrostatic spraying systems) or it is diluted automatically e.g. by being metered into a stream of diluent from a diluent storage tank carried on the tractor. Now a practical sprayer requires to be able to spray pesticides of several different kinds.

Some pesticides are conveniently formulated more concentrated than others, or need to be applied at lower rates. Thus the rate at which liquid flows through the sprayer to the sprayhead generally needs to be controllable. It may of course be controlled manually, by some device or other, but this may sometimes lead to operator error.

The present invention is particularly (though not solely) applicable to electrostatic agricultural spraying, which has particular advantages. Thus it provides more even cover of plants with much improved cover of under-leaf surfaces; reduces drift and contamination of the environment; and often enables lower rates of pesticide to be applied than are effective with uncharged sprays. It may be found, however, best to vary the applied voltage varied according to the nature of the pesticide formulation it is desired to apply.

The present invention provides a system for spraying pesticides in which manual dilution (with consequent operator hazard and possibly dilution errors) is avoided and the delivery rate of pesticide to spray nozzles may if desired be completely automatically determined. Thus the present invention provides a container according to claim 1 and also an apparatus for spraying liquid agrochemical formulations from a vehicle, comprising container coupling means for receiving a container suitable for a liquid and as in claim 1, at least one sprayhead for discharging said liquid and a liquid delivery system for conveying liquid from the container via the said coupling means and flow control means to the at least one sprayhead, characterised in that the flow control means when actuated, is responsive to the signal means carried by the container to influence the flow rate, the said signal means being set according to the nature of the liquid contents of the container.

The flow control means may take various forms. It may, for example, be a variable valve, for example a mechanical valve, such as a stopcock or iris, operated by electronic control means through an electromagnetic relay. Another suitable type of valve, particularly readily operable by electronic control, is a variable electrostatic valve of the type described in our copending European Patent application EP—A—0025280. One particularly convenient form of control means is a variable flow-rate metering pump. Such a pump may suitably be electrically driven, e.g. from an electrical power supply on the vehicle, and its speed is then readily controlled by electrical or electronic means controlling the power or frequency of the electrical supply to the pump. A metering pump, though more complex than a variable valve, can control liquid delivery more accurately since it does not depend on gravity to propel the liquid.

In one form of the invention, the signal means on the container comprises a coded signal which is sensed by the flow control means and which determines how the flow control means activates the delivery system. It may also determine how the charging means is activated. The coded signal may produce a range of effects. It may simply act as an 'on' switch, so that the machine will only work where the signal received has a predetermined value. The system may be designed to provide several different combinations of flow rate through the delivery system and voltage from the high potential source corresponding to different values of the coded signal on the container. The system may also be designed to vary voltage, or flow rate, or both, continuously between minimum and maximum values according to corresponding variation in the value of the coded signal (or signals). Coded signals may be provided in various forms, e.g. mechanical, electrical, magnetic or optical.

The signal means on the container may control the flow control means by providing to it an electrical signal. This electrical signal may be used (either directly or after amplification) to operate the high potential source or the liquid delivery system, at outputs corresponding to the magnitude of the signal.

A specific embodiment of the invention will now be described with reference to the drawing, in which

Figure 1 is a schematic diagram of a system according to the invention in operation,

Figure 2 is a vertical section through a spray nozzle,

Figure 3 is a schematic diagram of a second type of spraying system according to the invention,

Figure 4 shows diagrammatically a sprayhead malfunction detector circuit,

Figure 5 shows diagrammatically a second type of sprayhead malfunction detector circuit.

The system is mounted on a tractor (not shown). It comprises a demountable container 10 of about 25 litres capacity. A male screw-thread coupling 11 on the neck of the container 10 cooperates to give a liquid-tight seal with corresponding female screw-thread coupling means 12 carried on the tractor and forming part of the liquid distribution system 13. Liquid delivery system 13 leads from coupling means 12 via an electrically operated metering pump 14 to a spray boom 15 carrying a number of nozzles 16.

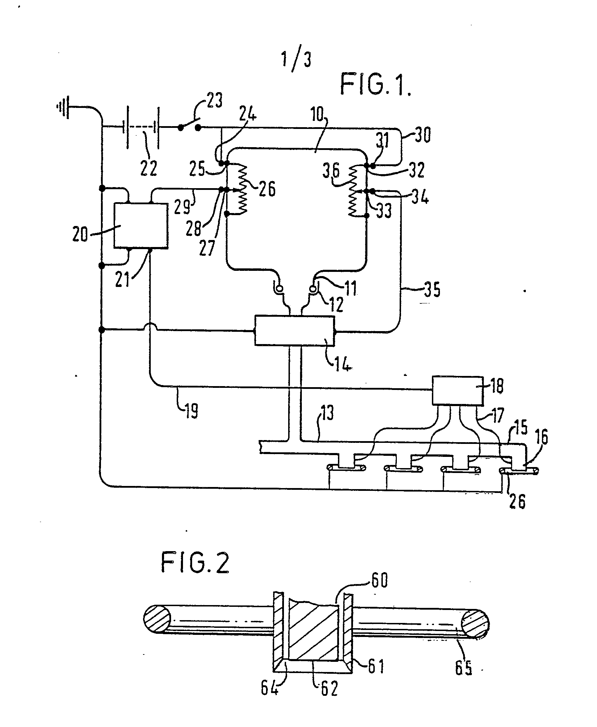

The construction of these is shown in more detail in Figure 2. Each nozzle is surrounded by an annular electrode 26 which is earthed. The body of each nozzle is made of electrically-conducting plastic, and is electrically connected via leads 17 to a junction-box 18, which communicates via high-tension lead 19 with one high voltage output terminal 21 of high-voltage generator 20. Generator 20 is powered from the 12-volt tractor battery 22 via the container 10.

The positive pole of the tractor battery 22 is connected, via switch 23, to a contact 24 carried on the tractor. This abuts a contact 25 on the container, which connects via a variable resistance 26 to a contact 27 on the container abutting a contact 28 carried on the tractor. Contact 28 is connected via lead 29 to an input terminal of generator 20. By a similar arrangement, pump 14 is powered from battery 22 via container 10. A lead 30 conveys current from battery 22 via switch 23 to a contact 31 carried on the tractor. This abuts a contact 32 on the container, which connects via a variable resistance 36 to a contact 33 on the container which abuts a contact 34 on the tractor. A lead 35 connects contact 34 to pump 14.

In operation, the container 10 is supplied from the manufacturer, having been filled with a suitable organic liquid pesticide formulation and sealed under safe factory conditions. At the factory the variable resistances 26 and 36 are adjusted to values suitable to the liquid in the container. This is conveniently carried out in a way which prevents the customer subsequently changing the setting; e.g. the resistances 26 and 36 may be adjustable only from inside the container. At the site where spraying is to be carried out, the container 10 is mounted on the tractor, unsealed and coupled to the liquid delivery system 13 via couplings 11 and 12, ensuring that the four sets of contacts (24, 25; 27, 28; 31, 32; 33, 34) are in contact. The tractor is then driven past the crops it is desired to spray, and the switch 23 closed.

This activates the pump 14 and the generator 20, the output of both being controlled to the desired degree by control of the current supplied to each, which is a function of the setting of resistances 26 and 36. Spray is conveyed to nozzles 16 by the action of pump 14, where the spray is charged by direct contact at the potential delivered by generator 20. Spray leaving the nozzles 16 breaks up into electrically charged droplets under the action of the electrostatic field between nozzles 16 and earthed electrodes 26, and is attracted to the plants to be treated.

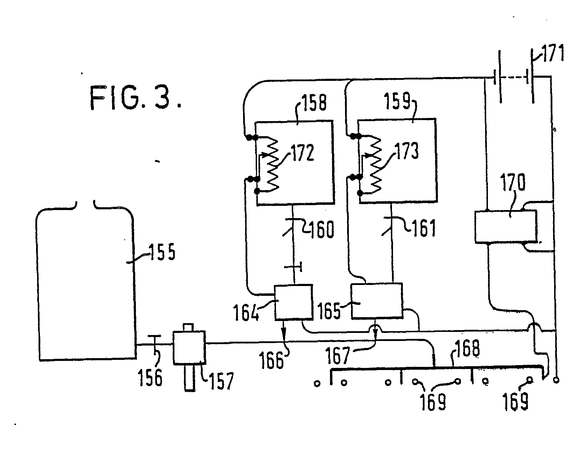

In the system described above with reference to Figure 1, the contents of container 10 are sprayed without further dilution. Figure 3 shows a tractor-mounted system in which dilution takes place; this however is carried out automatically, without the need for any manual mixing and consequent risk of errors or accidents. The system of Figure 3 comprises a reservoir 155 for an oil diluent (e.g. diesel fuel) for delivering diluent via a tap 156 to a mechanical pump 157 driven by the tractor power take-off. Two containers 158, 159 of generally similar type to that shown in Figure 1 contain concentrated organic liquid pesticide formulations and are connected via couplings 160, 161 to metering pumps 164, 165 which serve to inject pesticide into the diluent stream at 166, 167. From here the diluted pesticidal formulation passes to a boom 168 carrying electrostatic sprayheads 169 of the same type as shown in Figure 1. The sprayheads 169 are connected to one high-voltage terminal of a high-voltage generator 170, powered by the tractor battery 171. No provision for varying the output voltage of generator 170 is illustrated, though such may readily be provided if required. Metering pumps 164, 165 are also powered from battery 171 via variable resistances 172, 173 mounted on containers 158 and 159, in the same way as battery 22 powers pump 14 in Figure 1.

In operation, the rate at which pesticide from containers 158, 159 is controlled by the current provided in pumps 164, 165, which in turn is controlled by the setting of resistances 172, 173, without the need to make up special formulations. To spray two different incompatible pesticides, the flows from containers 158 and 159 may be directed to separate sprayheads. To spray an aqueous liquid pesticide formulation, use may be made of the electrostatic system for forming and spraying emulsions described in our copending unpublished UK patent application 8102823 of 30 January, 1981 entitled 'Spraying Emulsions'.

Systems such as that shown in Figure 3, containing a separate source of diluent, may conveniently be made to flush pesticide out of the nozzles and liquid delivery system, using pure diluent. The system is thereby cleaned for re-use with different pesticides. Such flushing may be made automatic.

In our invention, it is not necessary that flow through the liquid delivery system be determined uniquely by the signal means carried on the container. It is possible, for example, for the signal means to determine a base value for the flow rate, corresponding to a standard vehicle forward speed. Means may then be supplied to sense the actual forward speed of the spray vehicle and vary the flow rate from this standard to compensate for variations from the standard forward speed, in such a way that the amount of pesticide delivered per unit area remains constant over a range of forward speeds. Speed may be sensed by the rotation rate of a vehicle wheel, or by doppler sound or radar measurements. It is also possible to provide means for the spray operator to vary the standard flow rate, e.g. in exceptional circumstances. For example, a crop heavily infested with pests may be usefully sprayed at 150% or 200% of the normal rate; and a lightly infested one at 50 or 75% of the normal rate.

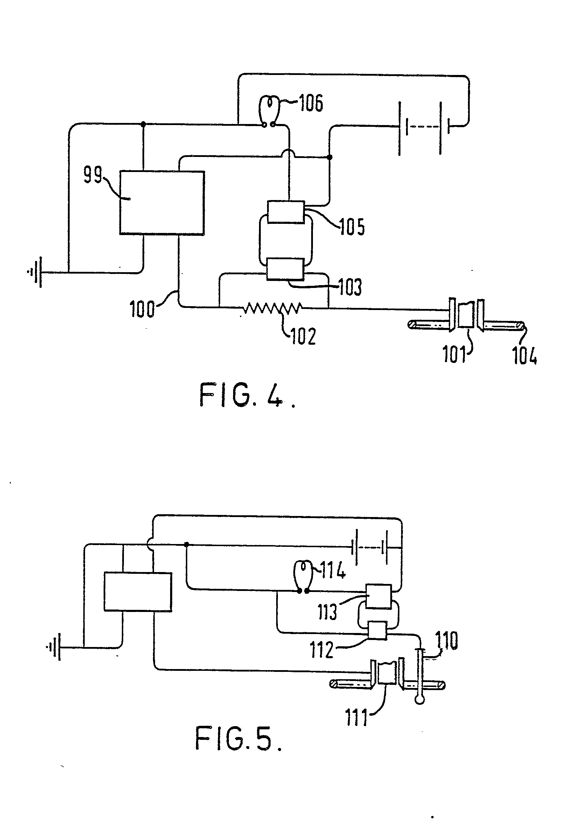

Means may be provided to detect malfunctioning of the electrostatic sprayheads used in the invention. One such possible means is shown schematically in Figure 4. In the lead 100 conveying high potential from generator 99 to sprayhead 101, a high resistance 102 (say 1 megohm) is inserted. Means 303 are provided for sensing the potential drop across this resistance. Using a voltage of about 20 KV, and a liquid charging current of about 2 micro amperes per nozzle, the potential drop across resistance 102 will be about 2 volts. If sprayhead 101 becomes wholly or partially blocked, the current will stop or reduce and the voltage will drop correspondingly. If there is a short circuit, e.g. between sprayhead 101 and earthed electrode 104, current and voltage will increase. Accordingly a control circuit 105 is provided to compare the potential drop sensed by means 103 with standard satisfactory limits, and if these are exceeded circuit 105 lights a warning light 106 in the tractor driver's cab. This tells the driver that one sprayhead is not operating correctly (and which it is). In mechanical spraying systems, sprayhead blockages may go undetected for substantial periods, and lead to crop loss through failure to apply correct rates of pesticide. A second possible means for detecting malfunctioning is shown in Figure 5. A probe 110 adjacent a sprayhead nozzle 111 has a charge induced on it which depends on the charge on the liquid leaving the nozzle 111. This charge is sensed by a field-effect (high input impedance) transistor 112. A circuit 113 is provided to compare the charge sensed by the transistor 112 against an appropriate range of standard values, and if the range is exceeded to light a warning light 114 in the tractor-driver's cab. Here a nozzle blockage will reduce the charge induced on probe 110, as will any reduction in the voltage supplied to nozzle 111.

If desired, signals from detector means of the type shown in Figure 4 or Figure 5 (or both) may be combined, and means responsive to variations in the combined signal may be provided to vary the flow through the delivery system until the combined signal is within pre-set limits. Alternatively or additionally, means responsive to such variations may be provided to vary the voltage from the high potential system until the combined signal is within pre-set limits.

Figure 2 is a detail, in vertical section, of an electrostatic sprayhead used in the invention. It comprises a nozzle 60 having a liquid outlet or mouth 64 in the form of an annular gap between an outer hollow cylinder 61 formed from conductive plastics and an inner solid cylinder 62 formed from conductive plastics. Around nozzle 60, and behind the mouth 64, an annular electrode 65 of bare metal is symmetrically disposed.

As an added safety measure to prevent refilling with concentrated toxic materials by spray operators under potentially hazardous conditions, the containers of our invention may include a device preventing re-use. Such a device may be of a type that has to be re-set at the factory once the container has been emptied, e.g. a fuse in the lowest part of the container which overheats and blows when no longer covered with liquid. It may be somewhat more complex, e.g. a device measuring liquid flow-rate out of the container, which, after the container has been emptied, modifies the signal means to cause the control means to stop operation of the delivery system.

If desired, the delivery system may include one or more electrostatic valves of the type disclosed in our European Patent Application EP—A—0025280.

Liquids sprayed by the process of our invention may be solutions, emulsions, or free-flowing suspensions of finely-divided solids in liquid. Instead of the annular nozzles shown in the drawings, it is possible to use one or more linear sprayheads, e.g. of the type shown in our UK Patent 1569707 (Figures 12—14).

**Claims**

1. A container (10) adapted to be mounted on a vehicle and suitable for liquid agrochemical formulations, having a mouth associated with coupling means (12) for delivering liquid to flow control means (14) and then to at least one sprayhead (16) carried on a vehicle on which it is to be mounted, characterised in that the container (10) carries signal means (36) set according to the nature of the intended liquid contents of the container, the said signal means (36) being adapted to influence the said flow control means (14) and thereby the flow rate, when the said flow control means is actuated.

2. A container as claimed in claim 1 in which the said signal means (36) provide an electrical signal, one or more electrical contacts being provided on the container for engagement with corresponding contacts carried on a vehicle on which it is to be mounted.

3. A container as claimed in claim 2, in which the electrical contacts include a contact for receiving electrical power from the vehicle.

4. A container as claimed in any of claims 1 to 3 which is provided with further signal means (26) arranged to determine the electrical potential of one or more electrostatic sprayheads (16) carried on a vehicle on which it is to be mounted according to the intended liquid contents of the containers.

5. Apparatus for spraying of liquid agrochemical formulations from a vehicle, comprising container coupling means (12) for receiving a container (10) suitable for a liquid and as set forth in any one of claims 1 to 4; at least one sprayhead (16) for discharging said liquid; a liquid delivery system (13) for conveying liquid from the container (10) via the coupling means (12) and flow control means (14) to the at least one sprayhead (16); characterised in that the flow control means (14), when actuated, is responsive to the signal means (36) carried by the container to influence the flow rate, the said signal means (36) being set according to the nature of the intended liquid contents of the said container.

6. Apparatus as claimed in claim 5, wherein electrical charging means (20) are provided to electrostatically charge liquid emerging from an electrostatic sprayhead (16).

7. Apparatus as claimed in claim 6, wherein the electrical potential provided by the said electrostatic · charging means (20) to a sprayhead is responsive to a further signal means (26) carried on the container (10), said further signal means being set according to the nature of the intended liquid contents of the said containers.

8. Apparatus as claimed in any of claims 5 to 7, which comprises coupling means for receiving at least two containers; each such coupling means leading to a separate liquid delivery system having flow control means (164, 165) responsive to the signal means (172, 173) on the container coupled thereto.

9. Apparatus as claimed in any of claims 5 to 8, which additionally comprises a diluent reservoir (155) for introducing spray diluent or flushant into the liquid delivery system.

10. Apparatus as claimed in any of claims 5 to 9, wherein the flow control means (14, 164, 165) comprises a variable flow rate metering pump.

11. Apparatus as claimed in any of claims 5 to 10, in which the signal means (36, 172, 173) are sensed electrically by the flow control means (14, 164, 165).

12. Apparatus as claimed in claims 6 or 7 wherein one or more of the sprayheads is provided with an electrical sensor (103, 112) for detecting malfunctioning of the sprayhead.

13. Apparatus as claimed in claim 12 wherein the electrical sensor comprises a means (103) for detecting the potential drop across a high resistance (102) in series with the sprayhead charging electrode.

14. Apparatus as claimed in claim 12 wherein the electrical sensor comprises a field effect transistor (112) for sensing the charge induced on a probe (110) adjacent the sprayhead (111).

15. Apparatus as claimed in any of claims 12 to 14 wherein electrical signals (106, 114) from the electrical sensor (103, 112) are displayed in a vehicle on which it is to be mounted.

**Patentansprüche**

1. Behälter (10), der auf einem Fahrzeug befestigbar und für die Aufnahme von flüssigen agrochemischen Formulierungen geeignet ist, mit einem eine Kupplung (12) aufweisenden Mundstück für die Abgabe von Flüssigkeit zu einer Strömungsregeleinrichtung (14) und dann zu mindestens einem Spritzkopf (16), der von dem Fahrzeug getragen wird, auf welchem der Behälter befestigt werden soll, dadurch gekennzeichnet, daß der Behälter (10) mit einer Signaleinrichtung (36) versehen ist, die entsprechend der Natur des vorgesehenen flüssigen Inhalts des Behälters eingestellt ist, wobei die Signaleinrichtung (36) so ausgebildet ist, daß sie die Strömungsregeleinrichtung (14) bei Betätigung derselben und damit die Strömungsgeschwindigkeit beeinflußt.

2. Behälter nach Anspruch 1, bei welchem die Signaleinrichtung (36) ein elektrisches Signal liefert, wobei ein oder mehrere elektrische Kontakte am Behälter vorgesehen sind, die entsprechende Kontakte auf dem Fahrzeug, auf dem er befestigt wird, berühren.

3. Behälter nach Anspruch 2, bei welchem einer der elektrischen Kontakte ein Kontakt ist, der elektrischen Strom vom Fahrzeug aufnimmt.

4. Behälter nach einem der Ansprüche 1 bis 3, welcher mit einer weiteren Signaleinrichtung (26) ausgerüstet ist, welche entsprechend dem vorgesehenen flüssigen Inhalt in dem Behälter die elektrische Spannung ein oder mehrerer elektrostatischer Spritzköpfe (16) bestimmt, die von dem Fahrzeug getragen werden, auf dem der Behälter befestigt werden soll.

5. Vorrichtung zum Spritzen von flüssigen agrochemischen Formulierung von einem Fahrzeug, mit einer Behälterkupplung (12) für die Aufnahme eines Behälters (10) für eine Flüssigkeit, wie er in einem der Ansprüche 1 bis 4 beschrieben ist, mit mindestens einem Spritzkopf (16) für die Abgabe der Flüssigkeit und mit einem Flüssigkeitsabgabesystem (13) für die Überführung von Flüssigkeit aus dem Behälter (10) über die Kupplung (12) und die Strömungsregeleinrichtung (14) zu mindestens einem Spritzkopf (16), dadurch gekennzeichnet, daß die Strömungsregeleinrichtung (14) bei Betätigung auf die Signaleinrichtung (16) am Behälter anspricht, um die Strömungsgeschwindigkeit zu beeinflussen, wobei die Signaleinrichtung (36) entsprechend der Natur des vorgesehenen flüssigen Inhalts des Behälters eingestellt ist.

6. Vorrichtung nach Anspruch 5, bei welcher eine elektrische Aufladungseinrichtung (20) vorgesehen ist, um die aus einem elektrostatischen Spritzkopf (16) austretende Flüssigkeit elektrostatisch aufzuladen.

7. Vorrichtung nach Anspruch 6, bei welcher die durch die elektrostatische Aufladungseinrichtung (20) einem Spritzkopf zugeführte elektrische Spannung von einer weiteren Signaleinrichtung (26) am Behälter (10) abhängt, wobei die weitere Signaleinrichtung entsprechend der Natur des vorghesehenen flüssigen Inhalts des Behälters eingestellt ist.

8. Vorrichtung nach einem der Ansprüche 5 bis 7, welche Kupplungen für die Aufnahme von mindestens zwei Behältern aufweist, wobei jede Kupplung zu einem gesonderten Flüssigkeitsabgabesystem führt, das Strömungsregeleinrichtungen (164, 165) aufweist, welche auf die Signalregeleinrichtungen (172, 173) an damit verbundenen Behältern ansprechen.

9. Vorrichtung nach einem der Ansprüche 5 bis 8, welche zusätzlich ein Verdünnungsmittelreservoir (155) für die Einführung eines Spritzmittelverdünnungsmittels oder Spülmittels in das Flüssigkeitsabgabesystem aufweist.

10. Vorrichtung nach einem der Ansprüche 5 bis 9, bei welcher die Strömungsregeleinrichtungen (14, 164, 165) eine Meßpumpe mit variablem Flüssigkeitsdurchsatz umfassen.

11. Vorrichtung nach einem der Ansprüche 5 bis 10, bei welcher die Signaleinrichtungen (36, 172, 173) elektrisch durch die Strömungsregeleinrichtungen (14, 164, 165) befühlt werden.

12. Vorrichtung nach einem der Ansprüche 6 oder 7, bei welcher einer oder mehrere der Spritzköpfe mit einem elektrischen Fühler (103, 112) ausgerüstet sind, der ein unrichtiges Funktionieren des Spritzkopfs feststellt.

13. Vorrichtung nach Anspruch 12, dadurch gekennzeichnet, daß der elektrische Fühler eine Einrichtung (103) aufweist, welche einen Spannungsabfall an einem hohen Widerstand (102) ermittelt, der in Reihe mit der Spritzkopfaufladeelektrode geschaltet ist.

14. Vorrichtung nach Anspruch 12, bei welcher der elektrische Fühler einen Feldeffekttransistor (112) aufweist, der die an einer Sonde (110) in der Nachbarschaft des Spritzkopfs (111) induzierte Ladung befühlt.

15. Vorrichtung nach einem der Ansprüche 12 bis 14, bei welcher elektrische Signale (106, 116) vom elektrischer Fühler (103, 112) an einem Fahrzeug angezeigt werden, auf dem sie befestigt ist.

**Revendications**

1. Récipient (10) conçu pour être monté sur un véhicule et convenant à des formulations agrochimiques liquides, présentant une embouchure associée à des moyens (12) de raccordement pour distribuer un liquide vers des moyens (14) de réglage d'écoulement, puis vers au moins une tête (16) de pulvérisation portée par un véhicule sur lequel il doit être monté, caractérisé en ce que le récipient (10) comporte des moyens à signaux (36) réglés en fonction de la nature du liquide qu'il est prévu que le récipient contienne, lesdits moyens à signaux (36) étant conçus pour influer sur lesdits moyens (14) de réglage d'écoulement et ainsi sur le débit d'écoulement lorsque lesdits moyens de réglage d'écoulement sont actionnés.

2. Récipient selon la revendication 1, dans lequel lesdits moyens à signaux (36) produisent un signal électrique, un ou plusieurs contacts électriques étant prévus sur le récipient afin de s'appliquer contre des contacts correspondants portés par un véhicule sur lequel il doit être monté.

3. Récipient selon la revendication 2, dans lequel les contacts électriques comprennent un contact destiné à recevoir de l'énergie électrique du véhicule.

4. Récipient selon l'une quelconque des revendications 1 à 3, qui comporte d'autres moyens à signaux (26) agencés pour déterminer le potentiel électrique d'une ou plusieurs têtes (16) de pulvérisation électrostatique portées par un véhicule sur lequel il doit être monté, en fonction du liquide qu'il est prévu que le récipient contienne.

5. Appareil pour pulvériser des formulations agrochimiques liquides à partir d'un véhicule, comprenant des moyens (12) de raccordement de récipient destinés à recevoir un récipient (10) prévu pour un liquide tel que décrit dans l'une quelconque des revendications 1 à 4; au moins une tête (16) de pulvérisation destinée à décharger ledit liquide; un système (13) de distribution de liquide destiné à faire passer le liquide du récipient (10) par l'intermédiaire des moyens (12) de raccordement et des moyens (14) de réglage d'écoulement vers au moins une tête (16) de pulvérisation; caractérisé en ce que les moyens (14) de réglage d'écoulement, lorsqu'ils sont actionnés, réagissent aux moyens à signaux (36) portés par le récipient afin d'influer sur le débit d'écoulement, lesdits moyens à signaux (36) étant réglés en fonction de la nature du liquide qu'il est prévu que ledit récipient contienne.

6. Appareil selon la revendication 5, dans lequel des moyens (20) de charge électrique sont prévus pour charger électrostatiquement le liquide émergeant d'une tête (16) de pulvérisation électrostatique.

7. Appareil selon la revendication 6, dans lequel le potentiel électrique appliqué par lesdits moyens (20) de charge électrostatique à une tête de pulvérisation est sensible à d'autres moyens à signaux (26) portés par le récipient (10), lesdits autres moyens à signaux étant réglés en fonction de la nature du liquide qu'il est prévu que ledit récipient contienne.

8. Appareil selon l'une quelconque des revendications 5 à 7, qui comprend des moyens de raccordement destinés à recevoir au moins deux récipients; chacun de ces moyens de raccordement conduisant à un système séparé de distribution de liquide comportant des moyens (164, 165) de réglage d'écoulement sensibles aux moyens à signaux (172, 173) portés par le récipient raccordé dans ce système.

9. Appareil selon l'une quelconque des revendications 5 à 8, qui comprend en outre un réservoir (155) de diluant destiné à introduire un diluant ou un fluide de rinçage de pulvérisation dans le système de distribution de liquide.

10. Appareil selon l'une quelconque des revendications 5 à 9, dans lequel les moyens (14, 164, 165) de réglage d'écoulement comprennent une pompe de dosage à débit d'écoulement variable.

11. Appareil selon l'une quelconque des revendications 5 à 10, dans lequel les moyens à signaux (36, 172, 173) sont détectés électriquement par les moyens (14, 164, 165) de réglage d'écoulement.

12. Appareil selon les revendications 6 ou 7, dans lequel une ou plusieurs des têtes de pulvérisation comportent un capteur électrique (103, 112) destiné à détecter un défaut de fonctionnement de la tête de pulvérisation.

13. Appareil selon la revendication 12, dans lequel le capteur électrique comprend des moyens (103) destinés à détecter la chute de potentiel à travers une résistance élevée (102) en série avec l'électrode de charge de la tête de pulvérisation.

14. Appareil selon la revendication 12, dans lequel le capteur électrique comprend un transistor (112) à effet de champ destiné à détecter la charge induite sur une sonde (110) adjacente à la tête (111) de pulvérisation.

15. Appareil selon l'une quelconque des revendications 12 à 14, dans lequel des signaux électriques (106, 116) provenant du capteur électrique (103, 112) sont affichés dans un véhicule sur lequel il doit être monté.

1/3

FIG.1.

FIG.2

FIG. 3.

FIG. 4.

FIG.5.